# EUROPÄISCHE PATENTSCHRIFT

(11) **EP 1 629 224 B1**
(45) Veröffentlichungstag und Bekanntmachung des Hinweises auf die Patenterteilung: **08.08.2007**
(21) Anmeldenummer: 04738471.4
(22) Anmeldetag: 24.04.2004
(51) Int. Cl.: F16J 15/32

(54) **BÜRSTENDICHTUNG ZUM ABDICHTEN RELATIV ZUEINANDER BEWEGLICHER BAUTEILE GEGENÜBER EINEM DRUCKGEFÄLLE**
BRUSH SEAL FOR SEALING COMPONENTS, WHICH MOVE RELATIVE TO ONE ANOTHER, FROM A DROP IN PRESSURE
BALAI D'ETANCHEITE POUR ETANCHEIFIER DES ELEMENTS, MOBILES LES UNS PAR RAPPORT AUX AUTRES, VIS-A-VIS D'UNE CHUTE DE PRESSION

(30) Priorität: 30.05.2003 DE 10324709
(43) Veröffentlichungstag der Anmeldung: 01.03.2006
(73) Patentinhaber: MTU Aero Engines GmbH, 80995 München (DE)
(72) Erfinder: BEICHL, Stefan, 82211 Herrsching (DE); BUTZ, Carsten, 81377 München (DE); CERNAY, Christoph, 83052 Bruckmühl (DE)
(86) Internationale Anmeldenummer: PCT/DE2004/000863
(87) Internationale Veröffentlichungsnummer: WO 2004/109162

(56) Entgegenhaltungen:
- WO-A-01/13013
- DE-A- 3 907 614
- DE-A- 10 018 273
- DE-A- 19 628 559
- DE-A- 19 720 648
- DE-A- 19 720 649
- US-B1- 6 328 311

## Beschreibung

Die Erfindung betrifft eine Bürstendichtung zum Abdichten relativ zueinander beweglicher Bauteile gegenüber einem Druckgefälle mit Borsten, denen eine Stützfläche zugeordnet ist, an die sich die zur Seite des niedrigeren Druckes ausgelenkten Borsten anlegen.

Die Verwendung von Bürstendichtungen zum Abdichten relativ zueinander beweglicher, insbesondere drehbeweglicher Bauteile gegenüber einem Druckgefälle ist hinlänglich bekannt. Solche Bürstendichtungen umfassen im Wesentlichen ein Borstengehäuse, das in einem Bauteil der abzudichtenden Anordnung gelagert ist und der Aufnahme der Borsten dient. Die Borsten sind dabei mit ihren freien Enden auf eine Dichtfläche des zweiten Bauteils der abzudichtenden Anordnung ausgerichtet und können sich gegenüber dem abzudichtenden Druckgefälle an einer im Borstengehäuse angeordneten Stützplatte abstützen. Deckplatte und Stützplatte des Borstengehäuses sind miteinander verbunden und innerhalb einer korrespondierenden Ausnehmung in dem ersten Bauteil seitenrichtig gelagert; vergleiche DE 100 18 273 A1.

Das Dokument US-A-6 328 311 betrifft eine Bürstendichtung mit zwei Borstenreihen bzw. Borstenbündeln, welche mit bewegten zylindrischen Umfangsflächen oder mit bewegten ebenen Stirnflächen in Kontakt stehen. Die Borstenreihen sind dabei axial oder radial beabstandet aber prinzipiell benachbart angeordnet. Die konstruktive Ausführung ist so, dass Borstenabschnitte zwischen zwei U-förmigen, radial oder axial offenen Ringen in der Weise geklemmt sind, dass jeder Borstenabschnitt U-förmig gebogen ist, wobei die parallelen Enden der U-Schenkel die freien, beabstandeten Borstenenden sind. Die Borstenenden sind in gleicher Weise so abgestützt, dass sie in eine Richtung nachgiebiger und in die andere Richtung steifer sind. Dies wird durch die Schenkellängen der U-förmigen Klemmringe (crowns) beeinflusst. Somit sind beide Borstenbündel bzw. -reihen für ein Druckgefälle in ein und der selben Richtung ausgelegt. Figur 4 dieser Schrift zeigt übrigens den Fall einer Fehlmontage.

Allen bisher bekannten Bürstendichtungen ist der Nachteil gemeinsam, dass sie nur für ein Druckgefälle in einer Richtung optimal eingesetzt werden können. Bei industriellen Anwendungen kann es aber zu einer Druckumkehr kommen, so dass die Bürstendichtung in der entgegengesetzten Druckrichtung auch wirken muss. Ähnliche Forderungen treten auch bei Lagerkammerdichtungen in Flugtriebwerken auf, wenn in bestimmten Betriebszuständen - z. B. unter Idle Drehzahl - keine sichere Beaufschlagung der Dichtung mit Sperrluft stattfindet.

Der Erfindung liegt die Aufgabe zugrunde hier Abhilfe zu schaffen durch eine Ausbildung, die es ermöglicht, ein und dieselbe Bürstendichtung unabhängig von der Richtung des Druckgefälles einzusetzen.

Ausgehend von einer Bürstendichtung der eingangsgenannten Art ist diese Aufgabe gemäß der Erfindung dadurch gelöst, dass die Borsten in zwei, entgegengesetzt wirkenden Druckgefällen zugeordnete, aneinandergrenzende oder benachbarte Borstenbündel aufgeteilt sind.

Nach einer Ausführungsform der Erfindung sind zwei getrennt gehaltene Borstenbündel in einem Borstengehäuse mit zwei gegenüberliegenden, insbesondere symmetrisch angeordneten und untereinander identischen Gehäusehälften angeordnet, welche Schenkel mit Stützflächen für die Borstenbündel aufweisen, ggf. mit einer Trennplatte zwischen den Borstenbündeln.

Nach einer weiteren Ausführungsform der Erfindung weist das die Borstenbündel umfassende Borstengehäuse eine im Querschnitt T-ähnliche Ausbildung auf mit einem zentralen Schenkel, dessen Fußbereich gegenüberliegende Stützflächen für die Borstenbündel bildet, die zwischen in die Schenkelhälften eines quer zum zentralen Schenkel liegenden Schenkels eingreifenden Platten und dem zentralen Schenkel gehalten sind.

Durch die erfinderische Gestaltung der neuen Bürstendichtung wird sichergestellt, dass es immer Borsten gibt, die in der richtigen Druckrichtung an der jeweiligen Stützfläche anliegen. Dies bedeutet, insbesondere bei der Anwendung der erfindungsgemäßen Bürstendichtung als Lagerkammerdichtung für Flugtriebwerke, dass ein Gehäusering an der Niederdruckseite als Stützring fungiert und ein Gehäusering an der Hochdruckseite als Deckring arbeitet.

Bei der letztgenannten, bevorzugten Ausführungsform kommt ein Borstenbündel erst ab einer bestimmten Druckdifferenz sicher zur Anlage an der jeweiligen Stützfläche, so dass erst ab einer solchen Druckdifferenz die volle Dichtwirkung erreicht wird. Aber auch eine solche Ausführungsform ist in ihrer Dichtungswirkung unabhängig von der Richtung des Druckgefälles.

Die Erfindung ist nachfolgend anhand von vier in der Zeichnung mehr oder minder schematisch dargestellten Ausführungsbeispielen beschreiben. Es zeigen:
- Fig. 1: eine Schnittdarstellung der erfindungsgemäßen Anordnung einer Bürstendichtung nach einer ersten Ausführungsform der Erfindung;
- Fig. 2: eine zweite Ausführungsform einer erfindungsgemäßen Bürstendichtung;
- Fig. 3: eine dritte Ausführungsform einer erfindungsgemäßen Bürstendichtung und
- Fig. 4: eine vierte Ausführungsform einer erfindungsgemäßen Bürstendichtung.

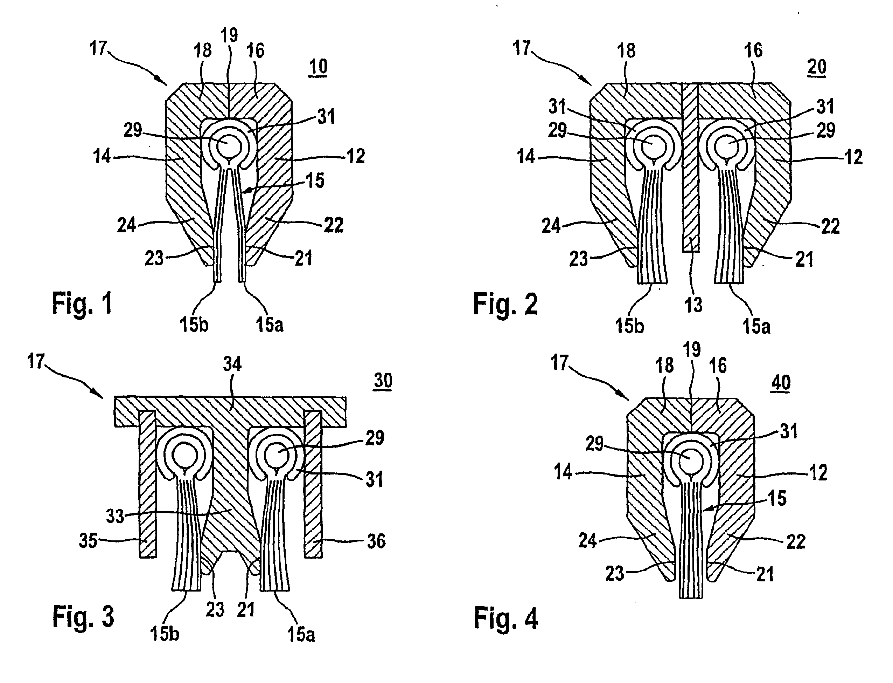

Eine in Figur 1 insgesamt mit der Bezugsziffer 10 bezeichnete Bürstendichtung zum Abdichten eines Spaltes zwischen zwei relativ zueinander beweglichen Bauteilen einer nicht dargestellten Strömungsmaschine, z. B. einer Gasturbine eines Flugtriebwerkes oder ähnliches umfasst zwei identische, spiegelbildlich angeordnete Gehäusehälften 12 und 14, die ein Borsten 15 umfassendes Gehäuse 17 bilden. Jede j-förmig ausgebildete Gehäusehälfte 12 und 14 liegt mit der Stirnseite ihres kurzen Schenkels 16 bzw. 18 an der benachbarten Gehäusehälfte bei 19 ebenflächig an. Die langen Schenkel 22, 24 der Gehäusehälften 12 und 14 des Gehäuses 17 verjüngen sich hier in ihren Endbereichen, sind in Bezug auf die nicht ausgelenkten Borsten 15 zu diesen hin geneigt und tragen einander zugewandte Stützflächen 21 und 23 für die Borsten 15.

Die Borsten 15 sind um einen Kerndraht 29 gelegt und werden von einer Spannhülse 31 reibschlüssig in ihrer Lage gehalten, wobei die Anordnung gemäß Figur 1 derart getroffen ist, dass die Borsten 15 in ein Teilbündel 15a und in ein Teilbündel 15 b aufgeteilt gehalten sind. Die Spannhülse 31 ist-wie aus Figur 1 ersichtlich - zwischen den Gehäusehälften 12 und 14 des Borstengehäuses 17 an deren kurzen Schenkeln anliegend fixiert.

Durch die vorstehend beschriebene Ausbildung von Borstengehäuse und Borstenbündeln wird ein solches Betriebsverhalten der Bürstendichtung erreicht, dass die Borsten in Abhängigkeit der Richtung des jeweils herrschenden Druckgefälles jeweils zur Richtung des niedrigeren Druckes ausgelenkt, sich an der Stützfläche 21 oder 23 der Gehäusehälften 12 und 14 anlegen, so dass auch bei Druckumkehr ein sicheres Abdichten des Dichtspaltes erfolgt.

Bei der Ausführungsform einer Bürstendichtung 20 nach Figur 2 tragen die der Figur 1 entsprechenden Bauteile des Borstengehäuses 17 gleiche Bezugsziffern. Zwischen den Gehäusehälften 12 und 14 ist eine Trennplatte 13 eingespannt, so dass für jedes der voneinander getrennten Borstenbündel 15a, 15b ein Kerndraht 29 und eine Spannhülse 31 vorgesehen sind, die in der in Figur 2 dargestellten Lage innerhalb des Borstengehäuses 17 gehalten sind.

Auch dort tragen die langen Schenkel 22 und 24 der Gehäusehälften 12 und 14 zu den Borstenbündel hin geneigte Flächen 21 und 23, die als Stützflächen für die jeweils zur Seite des jeweils niedrigeren Druckes ausgelenkten Borstenbündel 15a und 15b dienen.

Bei der Ausführungsform einer Bürstendichtung 30 nach Figur 3 weist das Borstengehäuse 17 eine im Querschnitt T-ähnliche Ausbildung auf mit einem zentralen Schenkel 33 und einem rechtwinkelig dazu liegenden Schenkel 34. Dort sind ebenfalls jedem Borstenbündel 15a und 15b ein Kerndraht 29 und eine Spannhülse 31 zugeordnet. Die die Borstenbündel haltenden Spannhülsen 31 werden durch in die hier waagerecht liegenden Schenkelhälften des Schenkels 34 eingreifende Platten 35 und 36 in ihrer in Figur 3 dargestellten Lage gehalten. Die im Fußbereich des hier senkrechten Schenkels 33 einander gegenüberliegenden Flächen 21 und 23 bilden die Stützflächen für die Borstenbündel 15a und 15b, so dass sich auch dort die Borsten der Borstenbündel jeweils zur Seite des niedrigeren Druckes ausgelenkt während des Betriebes an die zugeordnete Stützfläche anlegen können.

Die Bürstendichtung 40 gemäß der Ausführungsform nach Figur 4 entspricht der Bürstendichtung 10 nach der Ausführungsform nach Figur 1. Unterschiedlich ist jedoch, dass die Borsten 15 ungeteilt über dem Kerndraht 29 von der Spannhülse 31 gehalten sind und sich mittig in dem von den Stützflächen 21 und 23 des Gehäuses 17 begrenzten Spalt befinden. Auch dort können sich während des Betriebes die jeweils zur Seite des niedrigeren Druckes ausgelenkten Borsten an die als Stützflächen dienenden Flächen 21 oder 23 anlegen.

## Patentansprüche

1. Bürstendichtung zum Abdichten relativ zueinander beweglicher Bauteile gegenüber einem Druckgefälle, mit Borsten, denen eine Stützfläche an einem Borstengehäuse zugeordnet ist, an die sich die zur Seite des niedrigeren Druckes ausgelenkten Borsten anlegen, **dadurch gekennzeichnet, dass** die Borsten (15) in zwei, entgegengesetzt wirkendenden Druckgefällen zugeordnete, aneinandergrenzende oder benachbarte Borstenbündel (15a, 15b) aufgeteilt sind.

2. Bürstendichtung nach Anspruch 1, **gekennzeichnet durch** ein zwei getrennt gehaltene Borstenbündel (15a, 15b) umfassendes Borstengehäuse (17) aus zwei gegenüberliegenden, insbesondere symmetrisch angeordneten und untereinander identischen, Gehäusehälften (12, 14) mit die Stützflächen (21, 23) für die Borstenbündel (15a, 15b) aufweisenden Schenkeln (22, 24), und bedarfsweise **durch** eine zwischen den Gehäusehälften (12, 14) angeordnete Trennplatte (13).

3. Bürstendichtung nach Anspruch 1, **gekennzeichnet durch** eine im Querschnitt T-ähnliche Ausbildung des die Borstenbündel (15a, 15b) umfassenden Borstengehäuses (17) mit einem zentralen Schenkel (33), dessen Fußbereich gegenüberliegende Stützflächen (21, 23) für die Borstenbündel (15a, 15b) bildet, die zwischen in die Schenkelhälften eines quer zum Schenkel (33) liegenden Schenkels (34) eingreifenden Platten (35, 36) und dem zentralen Schenkel (33) gehalten sind.

## Claims

1. Brush seal for sealing components which move relative to one another against pressure loss, with bristles associated with a support surface on a bristle housing, against which bristles deflected to the side where the pressure is lower rest, **characterised in that** the bristles (15) are divided into two bristle sheaves (15a, 15b) adjacent or close to one another, which are respectively associated with pressure drops acting in opposite directions.

2. Brush seal according to Claim 1, **characterised in that** it comprises a bristle housing (17) that contains two separately held bristle sheaves (15a, 15b), said housing consisting of two opposed, in particular symmetrically arranged and mutually identical housing halves (12, 14) with arms (22, 24) that comprise the support surfaces (21, 23) for the bristle sheaves (15a, 15b), and if necessary with a separator plate (13) arranged between the housing halves (12, 14).

3. Brush seal according to Claim 1, **characterised in that** the bristle housing (17) that contains the bristle sheaves (15a, 15b) has a structure resembling a T in cross-section, with a central arm (33) whose foot area is provided with opposed support surfaces (21, 23) for the bristle sheaves (15a, 15b), which are held between plates (35, 36) engaged in the arm (34) positioned transversely to the arm (33) and the said central arm (33).

## Revendications

1. Balai d'étanchéité servant à étancher des éléments relativement mobiles les uns par rapport aux autres par rapport à une chute de pression, comprenant des poils auxquels est associée une surface d'appui contre laquelle s'appliquent les poils déviés vers le côté de la plus basse pression,
**caractérisé en ce que**
les poils (15) sont divisés en deux paquets de poils (15a, 15b) adjacents ou voisins associés à des chutes de pression agissant dans des directions opposées.

2. Balai d'étanchéité selon la revendication 1,
**caractérisé par**
un boîtier à poils (17) contenant deux paquets de poils (15a, 15b) maintenus séparément, composé de deux moitiés de boîtier (12, 14) identiques placées l'une face à l'autre, en particulier de façon symétrique, qui présentent des branches (22, 24) munies de surfaces d'appui (21, 23) pour les paquets de poils (15a, 15b) et, le cas échéant, séparées par une plaque de séparation (13) disposée entre les moitiés de boîtier (12, 14).

3. Balai d'étanchéité selon la revendication 1,
**caractérisé par**
une conception en forme de T de la section transversale du boîtier à poils (17) comprenant les paquets de poils (15a, 15b), comportant une branche centrale (33) dont la zone de base forme des surfaces d'appui (21, 23) opposées pour les paquets de poils (15a, 15b) qui sont enserrés entre la branche centrale (33) et des plaques (35, 36) insérées entre les moitiés de branche d'une branche (34) située transversalement à la branche (33).
